# EUROPÄISCHE PATENTSCHRIFT

(11) **EP 2 682 619 B1**
(45) Veröffentlichungstag und Bekanntmachung des Hinweises auf die Patenterteilung: **25.11.2020**
(21) Anmeldenummer: 12007300.2
(22) Anmeldetag: 24.10.2012
(51) Int. Cl.: F16C 29/06

(54) **Linearführungseinrichtung**
Linear guide device
Dispositif de guidage linéaire

(30) Priorität: 04.07.2012 WO PCT/EP2012/002803
(43) Veröffentlichungstag der Anmeldung: 08.01.2014
(73) Patentinhaber: Festo SE & Co. KG, 73734 Esslingen (DE)
(72) Erfinder: Feyrer, Thomas, 73734 Esslingen (DE)
(74) Vertreter: Patentanwälte Magenbauer & Kollegen Partnerschaft mbB

(56) Entgegenhaltungen:
- EP-A2- 0 121 065
- EP-A2- 0 121 065
- DE-A1- 3 615 899
- DE-A1- 19 614 513
- DE-A1- 19 941 926
- US-A- 4 582 371

## Beschreibung

Die Erfindung betrifft eine Linearführungseinrichtung, mit mindestens einer Linearführungseinheit, die über ein Gehäuse verfügt, das zwei in einer Höhenrichtung zueinander beabstandete Abdeckplatten und dazwischen einen separaten Kernkörper und einen den Kernkörper in einer zu der Höhenrichtung senkrechten Rahmenebene umschließenden separaten Rahmenkörper aufweist, wobei das Gehäuse zwei in der Höhenrichtung zueinander beabstandete und ringförmig in sich geschlossene Umlaufkanäle definiert, die jeweils eine Vielzahl von in der Kanallängsrichtung aufeinanderfolgend angeordneten Wälzlagerelementen aufnehmen, die eine Umlaufbewegung in der Kanallängsrichtung ausführen können, wobei jeder Umlaufkanal einen einem vorderen Rahmenschenkel des Rahmenkörpers zugeordneten und die sich in ihm befindenden Wälzlagerelemente gegen äußere Kräfte abstützenden geradlinigen Abstütz-Kanalabschnitt, einen einem hinteren Rahmenschenkel des Rahmenkörpers zugeordneten und zu dem Abstütz-Kanalabschnitt beabstandeten Rücklauf-Kanalabschnitt sowie zwei stirnseitig angeordnete und jeweils einem stirnseitigen Rahmenschenkel des Rahmenkörpers zugeordnete bogenförmige Umlenk-Kanalabschnitte aufweist, wobei jeder Abstütz-Kanalabschnitt längsseits über einen das partielle Hindurchragen der sich in ihm befindenden Wälzlagerelemente ermöglichenden und von dem vorderen Rahmenschenkel begrenzten Arbeits-Längsschlitz verfügt und wobei der Kernkörper einen als Abstützfläche für die sich momentan in den beiden Abstütz-Kanalabschnitten befindenden Wälzlagerelemente fungierenden Wandabschnitt jedes Abstütz-Kanalabschnittes bildet.

Eine aus der EP 0 121 065 A2 bekannte Linearführungseinrichtung dieser Art verfügt über ein Gehäuse, das sich aus einem Kernkörper, einem den Kernkörper umschließenden Rahmenkörper und zwei oben und unten angesetzten Abdeckplatten zusammensetzt. Der Kernkörper ist mit einer konvex gekrümmten Mantelfläche versehen und definiert gemeinsam mit dem ihn umschließenden Rahmenkörper eine ringförmig in sich geschlossene nutartige Vertiefung, die von einer Abdeckplatte abgedeckt ist, so dass sich ein Umlaufkanal ergibt, in dem eine Vielzahl zylindrischer Wälzelemente angeordnet ist. Im Bereich eines vorderen Rahmenschenkels ist der Rahmenkörper pro Umlaufkanal mit einem Längsschlitz versehen, durch den die Wälzlagerelemente zur Kooperation mit einer benachbarten Führungsschiene hindurchragen können. Vor allem die besondere Gestaltung des Kernkörpers, der mit seiner konvexen Mantelfläche zur Führung der Wälzlagerelemente während der gesamten Umlaufbewegung im Umlaufkanal verantwortlich ist, dürfte eine aufwendige Herstellung mit entsprechend hohen Herstellungskosten zur Folge haben.

Ein aus der DE 10 2005 037 323 A1 bekanntes Linearkugellager verfügt über einen zentralen Kernkörper, der zwischen zwei rahmenförmigen Schalenelementen angeordnet ist. An einer Vorderseite hat der Kernkörper eine rinnenartige Vertiefung, die eine Abstützfläche für in einem Umlaufkanal angeordnete Wälzlagerelemente bildet. Ein Rücklauf-Kanalabschnitt des Umlaufkanals ist in Form einer den Kernkörper durchsetzenden Bohrung ausgebildet. Stirnseitige Umlenk-Kanalabschnitte des Umlaufkanals sind durch kreisbogenförmige Nuten der aneinander angesetzten Schalenelemente gebildet. Bei diesem Linearkugellager besteht die Problematik, dass die im Umlaufkanal umlaufenden Wälzlagerelemente mehrfach Trennstellen zwischen den einzelnen Bestandteilen des Gehäuses überqueren müssen, was einen relativ hohen Verschleiß zur Folge hat.

Der Erfindung liegt die Aufgabe zugrunde, eine einfach aufgebaute und leicht zu montierende Linearführungseinrichtung zu schaffen, die präzise und verschleißarm arbeitet.

Zur Lösung dieser Aufgabe ist in Verbindung mit den eingangs genannten Merkmalen vorgesehen, dass zumindest die mit den Wälzlagerelementen in Kontakt stehenden Wandabschnitte des Rücklauf-Kanalabschnittes und der Umlenk-Kanalabschnitte beider Umlaufkanäle ohne Mitwirkung des Kernkörpers ausschließlich gemeinsam von dem Rahmenkörper und von den beiden bezüglich des Kernkörpers und des Rahmenkörpers separat ausgebildeten Abdeckplatten gebildet sind, indem in dem Rahmenkörper an seiner den Abdeckplatten zugewandte Oberseite und Unterseite jeweils eine sich entlang des hinteren Rahmenschenkels und entlang den beiden stirnseitigen Rahmenschenkeln erstreckende Führungsnut ausgebildet ist, die sowohl im Bereich des hinteren Rahmenschenkels als auch im Bereich der beiden stirnseitigen Rahmenschenkel von der benachbarten Abdeckplatte abgedeckt ist, wobei jede Abdeckplatte zugleich auch gemeinsam mit dem vorderen Rahmenschenkel des Rahmenkörpers einen der beiden Arbeits-Längsschlitze begrenzt und wobei jede Abdeckplatte ausschließlich an dem Kernkörper befestigt ist und nur dadurch die beiden Abdeckplatten, der Kernkörper und der Rahmenkörper zusammengehalten werden.

Bei einer solchen Linearführungseinrichtung verfügt die mindestens eine Linearführungseinheit über ein Gehäuse, dessen Komponenten teilweise ineinander verschachtelt sind, so dass sich ohne aufwendige Befestigungsmaßnahmen ein kompakter und dennoch stabiler Aufbau ergibt. Das Gehäuse enthält einen Kernkörper, der von einem Rahmenkörper umschlossen ist, wobei beide Komponenten sandwichartig zwischen zwei separaten Abdeckplatten angeordnet sind. Jede Abdeckplatte begrenzt gemeinsam mit dem Kernkörper und dem Rahmenkörper Längenabschnitte eines Umlaufkanals, in dem Wälzlagerelemente aufgenommen sind. Im Bereich jedes Abstütz-Kanalabschnittes bildet der Kernkörper eine zur Abstützung der von einer externen Kraft beaufschlagten Wälzlagerelemente dienende Abstützfläche, an der sich die Wälzlagerelemente abwälzen, wenn sie einen Abstütz-Kanalabschnitt durchlaufen. Die sich beidseits an den Abstütz-Kanalabschnitt anschließenden Umlenk-Kanalabschnitte sowie ein zu dem Abstütz-Kanalabschnitt beabstandeter Rücklauf-Kanalabschnitt jedes Umlaufkanals sind, zumindest was ihre mit den Wälzlagerelementen in Kontakt stehenden Wandabschnitte betrifft, ohne Mitwirkung des Kernkörpers ausschließlich durch den Rahmenkörper und eine der bezüglich des Kernkörpers gesonderten Abdeckplatten definiert. Bevorzugt sind sämtliche Rücklauf-Kanalabschnitte und Umlenk-Kanalabschnitte ohne jegliche Mitwirkung des Kernkörpers gemeinsam nur von dem Rahmenkörper und von den beiden Abdeckplatten gebildet. Der Rahmenkörper weist an sowohl seiner Oberseite als auch seiner Unterseite eine die Wälzlagerelemente führende Führungsnut auf, die von einer der beiden Abdeckplatten abgedeckt ist. Da der Kernkörper nicht zur Führung der Wälzlagerelemente beim Durchlaufen der Umlenk-Kanalabschnitte und des Rücklauf-Kanalabschnittes benötigt wird, ist er verhältnismäßig einfach herstellbar. Außerdem kann die Führungsnut vorteilhafterweise derart gestaltet werden, dass die Wälzlagerelemente im noch nicht angesetzten Zustand der zugeordneten Abdeckplatte leicht eingelegt werden können. Da die Wälzlagerelemente beim Durchlaufen der Umlaufkanäle nur beim Eintreten in den Abstütz-Kanalabschnitt und Austreten aus dem Abstütz-Kanalabschnitt eine Trennstelle zwischen mehreren Gehäusekomponenten übertreten müssen, ist zudem der im Betrieb auftretende Verschleiß sehr gering und die Führungsqualität sehr hoch. Bevorzugt sind sämtliche Rücklauf-Kanalabschnitte und Umlenk-Kanalabschnitte ohne jegliche Mitwirkung des Kernkörpers gemeinsam nur von dem Rahmenkörper und von den beiden Abdeckplatten gebildet. Jede Abdeckplatte ist ausschließlich an dem Kernkörper befestigt und nicht auch an dem Rahmenkörper. Für den Rahmenkörper erübrigt sich eine spezielle Befestigungsmaßnahme, wenn er sich mit seinen Rahmenschenkeln ringsum an dem von ihm umschlossenen Kernkörper abstützt. In der Höhenrichtung wird der Rahmenkörper von den am Kernkörper fixierten Abdeckplatten festgehalten. Eine feste Einspannung des Rahmenkörpers zwischen den Abdeckplatten ist hierbei nicht zwingend erforderlich.

Die Linearführungseinrichtung kann mit nur einer oder mit mehreren Linearführungseinheiten ausgestattet sein. Jede Linearführungseinheit ist vorzugsweise kassettenartig strukturiert.

Vorteilhafte Weiterbildungen der Erfindung gehen aus den Unteransprüchen hervor.

Jede der beiden Führungsnuten hat zweckmäßigerweise über ihre gesamte Länge hinweg eine konstante Querschnittskontur. Dies ermöglicht eine besonders einfache Herstellung und sorgt für ein gleichmäßiges Führungsverhalten bezüglich der Wälzlagerelemente.

Vorzugsweise haben die Führungsnuten in der Höhenrichtung der Linearführungseinheit jeweils eine derartige Nuttiefe, dass die Wälzlagerelemente zur Gänze darin aufgenommen sind. Auf diese Weise kann die Abdeckplatte in einer geometrisch sehr einfachen Gestalt ausgeführt werden, insbesondere mit einer Planfläche an der dem Rahmenkörper und dem Kernkörper zugewandten Seite.

Die Führungsnuten sind insbesondere so ausgebildet, dass ihre Nutflanken sich bis hin zur Abdeckplatte erstrecken. Auf diese Weise kann besonders einfach ein Eindringen von Verunreinigungen in die Umlaufkanäle verhindert werden. Außerdem sind hierdurch der Rücklauf-Kanalabschnitt und die Umlenk-kanalabschnitte vom Kernkörper vollständig abgeschottet.

Der Rahmenkörper umschließt mit seinen Rahmenschenkeln eine durchgehende Rahmenöffnung, wobei zweckmäßigerweise jede Führungsnut an den der Rahmenöffnung zugewandten Innenflächen der stirnseitigen Rahmenschenkel ausmündet und somit von einander entgegengesetzten Stirnseiten her in den sich anschließenden Abstütz-Kanalabschnitt übergeht. Auf diese Weise ist ein optimaler Übergang zwischen den Umlenk-Kanalabschnitten und dem Abstütz-Kanalabschnitt gewährleistet.

Zweckmäßigerweise verfügt der Kernkörper rückseitig über eine ebene, keine Nut aufweisende Rückfläche, mit der er am hinteren Rahmenschenkel anliegt. Weiterhin ist es zweckmäßig, wenn der Kernkörper, bevorzugt in Ergänzung zu der ebenen Rückfläche, über an seinen beiden Stirnseiten vorgesehene ebene Stirnflächen verfügt, mit denen er an jeweils einem der beiden stirnseitigen Rahmenschenkel des Rahmenkörpers anliegt. Derartige einfache Formgebungen reduzieren die Herstellungskosten und sorgen dennoch für eine zuverlässige gegenseitige Abstützung zwischen Kernkörper und Rahmenkörper in der Rahmenebene.

Zur Bildung der beiden zugeordneten Abstützflächen für die beiden Umlaufkanäle ist der Kernkörper zweckmäßigerweise mit einer an einem Hauptabschnitt einstückig angeformten Abstützrippe versehen. Der Hauptabschnitt ist bevorzugt quaderförmig gestaltet.

Vorzugsweise deckt jede Abdeckplatte die ihr zugeordnete Führungsnut über die gesamte Länge hinweg vollständig ab. Außerdem ist es von Vorteil, wenn jede Abdeckplatte den ihr zugeordneten Abstütz-Kanalabschnitt unter Freilassung des Arbeits-Längsschlitzes partiell begrenzt. Auf diese Weise kann gewährleistet werden, dass bei abgenommener Abdeckplatte eine gemeinsam von dem Kernkörper und von dem Rahmenkörper definierte, ringförmig in sich geschlossene nutartige Vertiefung vorliegt, in die die Wälzlagerelemente beim Zusammenbau der Linearführungseinheit leicht einlegbar sind.

Während der Rahmenkörper zweckmäßigerweise aus einem Kunststoffmaterial besteht, ist der Kernkörper insbesondere ein Metallkörper. Auch die Abdeckplatten bestehen zweckmäßigerweise aus Metall. Als Metall wird insbesondere Stahl, vorzugsweise Edelstahl gewählt, da es besonders medienbeständig und verschleißfest ist.

Die Befestigung der Abdeckplatten am Kernkörper erfolgt zweckmäßigerweise durch eine Schweißverbindung. Hierbei kommt insbesondere eine Laserschweißverbindung zur Anwendung. Die Abdeckplatte kann von mehreren, bevorzugt als Schlitze ausgeführten Durchbrechungen durchsetzt sein, in denen der Laserschweißvorgang ausgeführt wird, so dass das Volumen der Schmelze reduziert wird und sich die Schweißnaht nicht über die bevorzugt plane Außenfläche der Abdeckplatte hinauswölbt.

Als alternative Befestigungsmöglichkeit kommt beispielsweise eine Klebeverbindung oder auch eine Befestigung mittels gesonderter Befestigungselemente wie Schrauben oder Nieten in Frage.

Die von dem Kernkörper innerhalb des Abstütz-Kanalabschnittes definierten Abstützflächen für die Wälzlagerelemente haben zweckmäßigerweise eine konkave Querschnittskontur. Dadurch kann erreicht werden, dass die Wälzlagerelemente bei externer Belastung ausschließlich an die zugeordnete Abstützfläche angedrückt werden und nicht auch an die den Arbeits-Längsschlitz begrenzenden Abdeckplatten. Die Abstützfunktion bezüglich der Wälzlagerelemente wird dann ausschließlich von dem Kernkörper übernommen, so dass an die anderen Komponenten des Gehäuses der Linearführungseinheit geringere Festigkeitsanforderungen gestellt werden, was sich positiv auf die Herstellungskosten auswirkt.

Die Linearführungseinrichtung enthält zweckmäßigerweise wenigstens eine Führungsschiene, die bevorzugt über eine lineare Erstreckung verfügt und die mit mindestens einer Linearführungseinheit kooperiert. Die betreffende Linearführungseinheit liegt mit denjenigen Abschnitten ihrer Wälzlagerelemente, die durch den Arbeits-Längsschlitz hindurchragen, an der Führungsschiene an. Diese Wälzlagerelemente stützen sich somit einerseits an der Führungsschiene und andererseits an einer der von dem Kernkörper gebildeten Abstützflächen ab. Die Abstützfunktion bezüglich der Wälzlagerelemente wird somit innerhalb der Linearführungseinheit bevorzugt ausschließlich von dem Kernkörper übernommen, während die Abdeckplatten keinerlei Abstützfunktion für die Wälzlagerelemente übernehmen.

Um die Linearführungseinheit an einer zu führenden Komponente befestigen zu können, ist sie zweckmäßigerweise in der Höhenrichtung von mindestens einem Befestigungsloch durchsetzt. Dieses Befestigungsloch durchsetzt sowohl die beiden Abdeckplatten als auch den dazwischen angeordneten Kernkörper. Alternativ kann auch eine anders gestaltete Befestigungsschnittstelle vorgesehen sein.

Innerhalb des Abstütz-Kanalabschnittes sind die Wälzlagerelemente bevorzugt quer zur Kanallängsrichtung mit einem geringen Spielraum aufgenommen, so dass ein verschleißarmer Übertritt zwischen dem Abstütz-Kanalabschnitt und den beiden sich stirnseitig daran anschließenden Umlenk-Kanalabschnitten möglich ist.

Während der Kernkörper und die Abdeckplatten bevorzugt aus einem Stahlmaterial bestehen, ist der in sich geschlossen ausgebildete Rahmenkörper zweckmäßigerweise aus einem Kunststoffmaterial im Rahmen eines Spritzgussvorganges gefertigt. Die beiden Führungsnuten können beim Spritzgießen mit hoher Genauigkeit ausgebildet werden.

Bevorzugt besteht jede Linearführungseinheit aus nur drei unterschiedlichen Bauteilen, nämlich dem Kernkörper, dem Rahmenkörper und den Abdeckplatten, wobei die beiden Abdeckplatten untereinander identisch ausgebildet sind. Dies ermöglicht die Einhaltung geringer Herstellungskosten.

Nachfolgend wird die Erfindung anhand der beiliegenden Zeichnung näher erläutert. In dieser zeigen:
- Figur 1: eine bevorzugte Ausgestaltung einer erfindungsgemäßen Linearführungseinrichtung, bei der mehrere Linearführungseinheiten an einem Führungsschlitten befestigt sind und mit jeweils einer an einem Tragkörper fixierten Führungsschiene kooperieren,
- Figur 2: die Linearführungseinrichtung aus Figur 1 in einer Stirnansicht mit Blickrichtung gemäß Pfeil II aus Figur 1,
- Figur 3: die in Figur 2 in dem umrahmten Bereich III abgebildete Linearführungseinheit in einer perspektivischen Einzeldarstellung,
- Figur 4: die Linearführungseinheit aus Figur 3 in einer Stirnansicht mit Blickrichtung gemäß Pfeil IV aus Figur 3,
- Figur 5: einen Querschnitt der Linearführungseinheit gemäß Schnittlinie V-V aus Figur 6,
- Figur 6: die Linearführungseinheit in einem Längsschnitt gemäß Schnittlinie VI-VI aus Figuren 4 und 5 im Bereich eines Umlaufkanals,
- Figur 7: einen weiteren Längsschnitt der Linearführungseinheit in einer bezüglich Figur 6 um 90° verdrehten Schnittebene gemäß Schnittlinie VII-VII aus Figur 6, und
- Figur 8: eine Explosionsdarstellung der Linearführungseinheit in einer perspektivischen Darstellung.

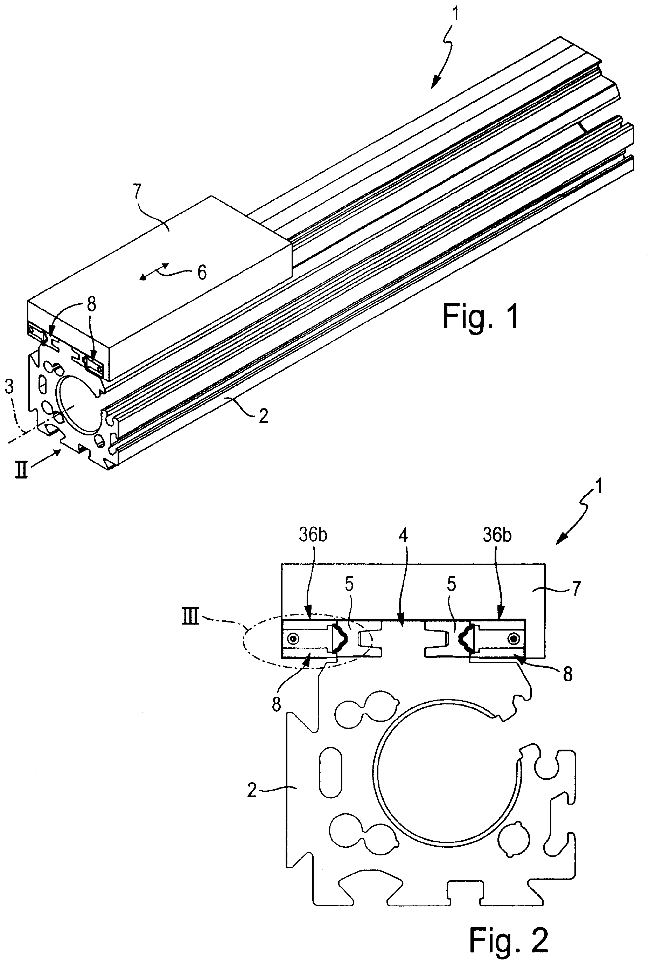

Die in Figuren 1 und 2 illustrierte Linearführungseinrichtung 1 enthält einen Tragkörper 2, an dem unter Bildung einer eine Längsachse 3 aufweisenden Führungsstruktur 4 zwei lineare Führungsschienen 5 so angeordnet sind, dass sie parallel zu der Längsachse 3 ausgerichtet sind. Auf der Führungsstruktur 4 sitzt, gemäß Doppelpfeil 6 in Achsrichtung der Längsachse 3 verfahrbar, ein Führungsschlitten 7, der die Führungsstruktur 4 reiterartig übergreift und an jeder Führungsschiene 5 mittels einer Linearführungseinheit 8 verschiebbar gelagert ist.

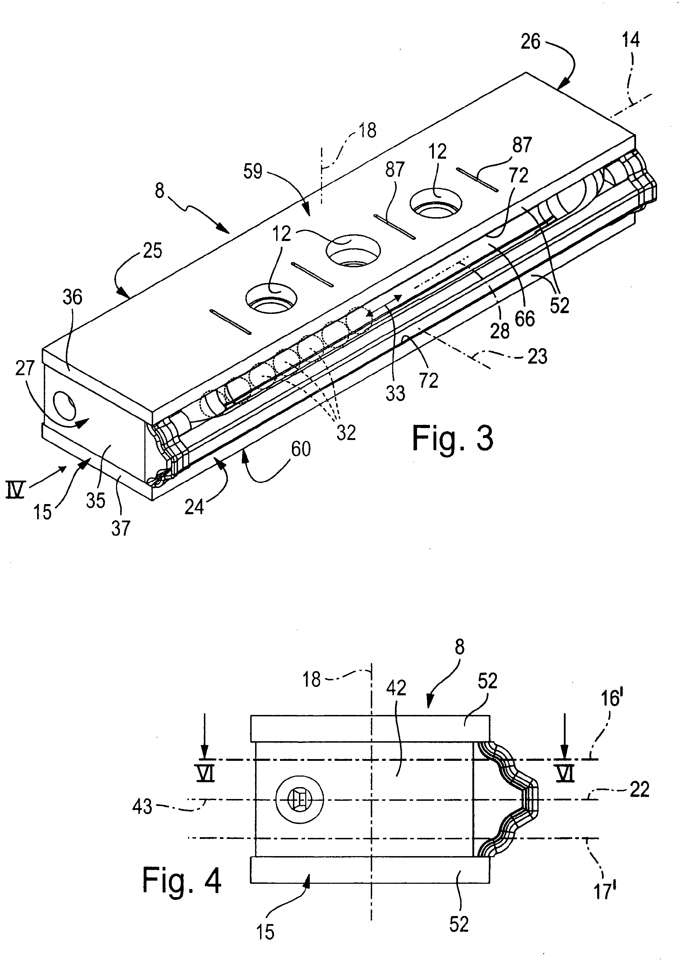

Die beiden Linearführungseinheiten 8 sind bevorzugt identisch ausgebildet. Eine davon ist in den Figuren 3 bis 8 einzeln illustriert. Diese Figuren zeigen auch mindestens eine an der Linearführungseinheit 8 ausgebildete Befestigungsschnittstelle 12, mit der sie in bevorzugt lösbarer Weise an dem Führungsschlitten 7 befestigt ist. Mindestens eine Befestigungsschnittstelle 12 ist bevorzugt von einem oder mehreren Befestigungslöchern gebildet, die die Linearführungseinheit 8 durchsetzen.

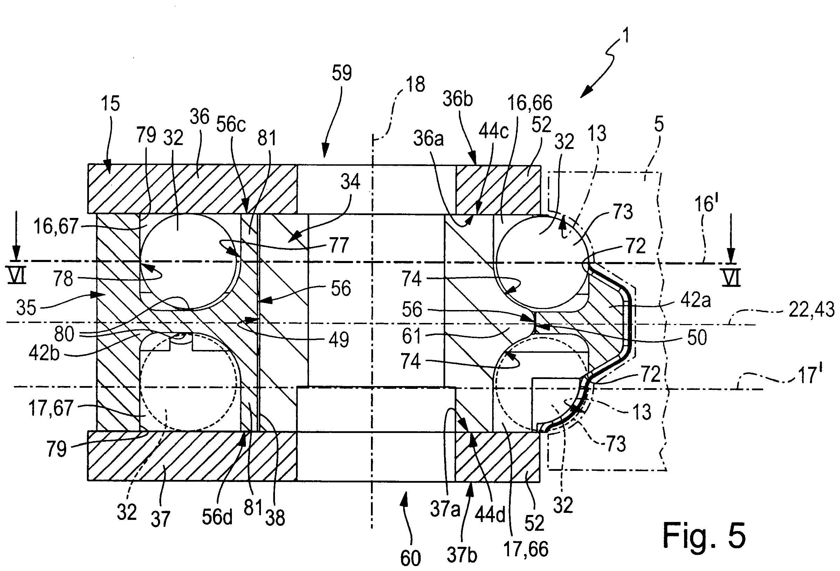

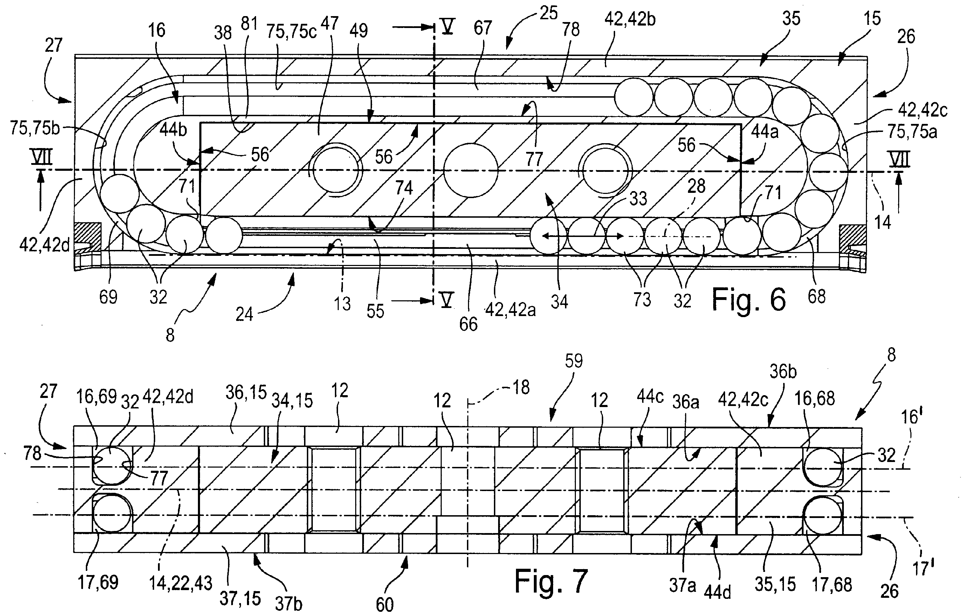

In Figur 5 ist die mit der Linearführungseinheit 8 kooperierende Führungsschiene 5 strichpunktiert angedeutet. Sie enthält zum Zusammenwirken mit jeder Linearführungseinheit 8 zwei zueinander parallele, sich in der Längsrichtung der Führungsschiene 5 erstreckende Führungsflächen 13, von denen eine auch in Figur 6 durch eine strichpunktierte Linie angedeutet ist.

Im Folgenden wird anhand der Figuren 3 bis 8 ein bevorzugter Aufbau der Linearführungseinheit 8 erläutert.

Die Linearführungseinheit 8 ist bevorzugt nach Art einer Kassette strukturiert und hat eine längliche Gestalt mit einer Längsachse 14. Sie verfügt über ein mehrteiliges Gehäuse 15, das in seinem Innern zwei ringförmig in sich geschlossene Umlaufkanäle 16, 17 enthält, die beide über jeweils eine langgestreckte Gestaltung entlang der Längsachse 14 verfügen.

Die Linearführungseinheit 8 hat eine zu der Längsachse 14 rechtwinkelige Hochachse 18, deren Achsrichtung im Folgenden auch als Höhenrichtung bezeichnet wird. Jeder Umlaufkanal 16, 17 erstreckt sich in einer Kanalebene 16', 17', wobei diese beiden Kanalebenen 16', 17' in der Höhenrichtung 18 beabstandet zueinander angeordnet und bevorzugt rechtwinkelig zu der Hochachse 18 ausgerichtet sind.

Die Linearführungseinheit 8 hat eine zu der Hochachse 18 rechtwinkelige Mittelebene 22, bezüglich der sie zweckmäßigerweise spiegelsymmetrisch aufgebaut ist. Die beiden Kanalebenen 16', 17' und folglich auch die beiden Umlaufkanäle 16, 17 liegen in der Höhenrichtung 18 bevorzugt mit gleichem Abstand diesseits und jenseits der Mittelebene 22.

Die Linearführungseinheit 8 hat auch noch eine sowohl zu der Längsachse 14 als auch zu der Hochachse 18 rechtwinkelige Querachse 23. Die beiden einander entgegengesetzt in der Achsrichtung der Querachse 23 orientierten Seiten der Linearführungseinheit 8 seien im Folgenden auch als Vorderseite 24 und Rückseite 25 bezeichnet, während die beiden einander entgegengesetzt in der Achsrichtung der Längsachse 14 orientierten Seiten der Linearführungseinheit 8 auch als Stirnseiten 26, 27 bezeichnet werden sollen.

Jeder Umlaufkanal 16, 17 hat eine teils geradlinige und teils bogenförmig gekrümmte Längsachse 28, die im Folgenden auch als Kanallängsrichtung 28 bezeichnet werden soll. In jedem Umlaufkanal 16, 17 befindet sich eine Vielzahl individueller Wälzlagerelemente 32, die in der Kanallängsrichtung 28 aufeinanderfolgend angeordnet sind, so dass sich quasi eine Kette aus Wälzlagerelementen 32 ergibt. Bevorzugt sind die Wälzlagerelemente 32 in dem Umlaufkanal 16, 17 individuell aufgenommen und nicht aneinander fixiert. In Figuren 3 und 6 sind der Vereinfachung halber nur einige der Wälzlagerelemente 32 gezeigt, die in Figur 3 zudem nur gestrichelt angedeutet sind. In der Figur 5 sind zur besseren Verdeutlichung der Querschnittskontur des zweiten Umlaufkanals 17 die darin befindlichen Wälzlagerelemente 32 auch nur gestrichelt angedeutet.

Die Wälzlagerelemente 32 sind derart mit Bewegungsspiel im jeweiligen Umlaufkanal 16, 17 aufgenommen, dass sie darin in der Kanallängsrichtung 28 beweglich sind und folglich eine durch einen Doppelpfeil angedeutete Umlaufbewegung 33 in der Kanallängsrichtung 28 im Innern des jeweiligen Umlaufkanals 16, 17 ausführen können.

Die Wälzlagerelemente 32 sind derart dicht aufeinanderfolgend angeordnet, dass die gesamte Kette aus Wälzlagerelementen 32 zu einer Umlaufbewegung 33 angetrieben wird, wenn auch nur in eines der Wälzlagerelemente 32 eine in der Kanallängsrichtung 28 orientierte Stellkraft eingeleitet wird.

Die Wälzlagerelemente 32 des Ausführungsbeispiels sind in vorteilhafter Weise kugelförmig gestaltet. Bei einem nicht illustrierten Ausführungsbeispiel sind die Wälzlagerelemente 32 kreiszylindrisch gestaltet, wobei benachbarte Wälzlagerelemente 32 winkelig zueinander ausgerichtet sind.

Das Gehäuse 15 hat einen mehrteiligen Aufbau. Es enthält einen Kernkörper 34, einen Rahmenkörper 35 und zwei jeweils einem der beiden Umlaufkanäle 16, 17 zugeordnete Abdeckplatten 36, 37. Diese im Folgenden gemeinsam auch als Gehäusekörper 34-37 bezeichneten Bestandteile der Linearführungseinheit 8 sind zu einer fest zusammenhaltenden Baugruppe zusammengefasst, die das Gehäuse 15 bildet.

Der bevorzugt einstückig ausgebildete Rahmenkörper 35 umrahmt eine Rahmenöffnung 38, in die der Kernkörper 34 eingesetzt ist. Diese beiden Gehäusekörper 34, 35 sind gemeinsam sandwichartig zwischen den beiden Abdeckplatten 36, 37 angeordnet.

Der vorzugsweise aus einem gehärteten Stahl oder einem vergleichbar belastbaren Material bestehende Kernkörper 34 hat eine längliche Erstreckung mit Längsachse 34a. Auch der Rahmenkörper 35 hat eine längliche Erstreckung mit einer Längsachse 35a. In dem ineinander eingesetzten Zustand des Kernkörpers 34 und des Rahmenkörpers 35 fallen die beiden Längsachsen 34a, 35a zweckmäßigerweise zusammen. Beide Längsachsen 34a, 35a sind mit der Längsachse 14 der Linearführungseinheit 8 gleichgerichtet.

Der Rahmenkörper 35 ist ein in sich geschlossenes ringförmiges Gebilde und setzt sich aus vier bevorzugt einstückig miteinander verbundenen Rahmenschenkeln 42 zusammen. Bei diesen vier Rahmenschenkeln 42 handelt es sich um einen zu der Längsachse 35a parallelen vorderen Rahmenschenkel 42a, der der Vorderseite 24 zugeordnet ist, um einen zu der Längsachse 35a ebenfalls parallelen hinteren Rahmenschenkel 42b, der der Rückseite 25 zugeordnet ist, sowie ferner um zwei den vorderen und hinteren Rahmenschenkel 42a, 42b jeweils verbindende stirnseitige Rahmenschenkel 42c, 42d, die jeweils einer der beiden Stirnseiten 26, 27 zugeordnet sind.

Während der vordere und hintere Rahmenschenkel 42a, 42b jeweils bevorzugt stegförmig gestaltet ist, verfügen die beiden stirnseitigen Rahmenschenkel 42c, 42d bevorzugt über eine plattenartige Formgebung mit zu der Höhenrichtung 18 senkrechter Hauptausdehnung.

Alle Rahmenschenkel 42 gemeinsam spannen eine Rahmenebene 43 des Rahmenkörpers 35 auf, die rechtwinkelig zu der Hochachse 18 ausgerichtet ist. Der Kernkörper 34 hat zwei einander entgegengesetzt in Achsrichtung seiner Längsachse 34a orientierte erste und zweite Stirnflächen 44a, 44b, die zweckmäßigerweise eben ausgebildet sind und in einer zu der Längsachse 34 rechtwinkeligen Ebene verlaufen. An diesen beiden Stirnflächen 44a, 44b ist er von jeweils einem der beiden stirnseitigen Rahmenschenkel 42c, 42d flankiert, die an ihm mit ihren der Rahmenöffnung 38 zugewandten Innenflächen 56 zweckmäßigerweise anliegen. Des Weiteren ist der Kernkörper 34 im Bereich der Vorderseite 24 von dem vorderen Rahmenschenkel 42a und im Bereich der Rückseite 25 von dem hinteren Rahmenschenkel 42b flankiert. An der Rückseite hat der Kernkörper 34 zweckmäßigerweise eine zu der Querachse 23 rechtwinkelige Rückfläche 49, mit der er sich an der ihm zugewandten Innenfläche 56 des hinteren Rahmenschenkels 42b abstützt. Die Rückfläche 49 ist bevorzugt eben und nutfrei ausgebildet. An einer entgegengesetzt orientierten Vorderfläche 50 stützt sich der Kernkörper 34 an der Innenfläche 56 des vorderen Rahmenschenkels 42a ab. Auf diese Weise sind der Rahmenkörper 35 und der Kernkörper 34 in der Rahmenebene 43 relativ zueinander unbeweglich abgestützt.

Zur besseren Unterscheidung seien im Folgenden die beiden einander entgegengesetzt in der Höhenrichtung orientierten Seiten der Linearführungseinheit 8 zum einen als Oberseite 59 und zum anderen als Unterseite 60 deklariert. Kernkörper 34 und Rahmenkörper 35 haben zweckmäßigerweise untereinander die gleiche Höhe, so dass sie an der Oberseite 59 und an der Unterseite 60 jeweils flächenbündig zueinander ausgerichtet sind. Eine obere Außenfläche 44c des Kernkörpers 34 erstreckt sich in der gleichen Ebene wie eine obere Außenfläche 56c des Rahmenkörpers 35, während sich eine untere Außenfläche 44d des Kernkörpers 34 in der gleichen Ebene wie eine untere Außenfläche 56d des Rahmenkörpers 35 erstreckt.

Die beiden Abdeckplatten 36, 37 haben jeweils eine der anderen Abdeckplatte 37, 36 zugewandte Montagefläche 36a, 37a, die bevorzugt eben ausgebildet ist. Die der Oberseite 59 zugeordnete erste Abdeckplatte 36 liegt mit ihrer Montagefläche 36a an der oberen Außenfläche 44c des Kernkörpers 34 und zweckmäßigerweise auch an der oberen Außenfläche 56c des Rahmenkörpers 35 an. In vergleichbarer Weise liegt die der Unterseite 60 zugeordnete zweite Abdeckplatte 37 mit ihrer Montagefläche 37a an der unteren Außenfläche 44d des Kernkörpers 34 und zweckmäßigerweise auch an der unteren Außenfläche 56d des Rahmenkörpers 35 an.

Die Gehäusekörper 34-37 werden ausschließlich dadurch zusammengehalten, dass jede Abdeckplatte 36, 37 nur am Kernkörper 34 befestigt ist. Beim Ausführungsbeispiel ist dies mittels einer Schweißverbindung und insbesondere einer Laserschweißverbindung realisiert. Für diesen Zweck ist jede Abdeckplatte 36, 37 vorzugsweise von mehreren in ihrer Längsrichtung beabstandet zueinander angeordneten Querschlitzen 87 in der Höhenrichtung 18 durchsetzt, in denen eine Schweißnaht ausgebildet ist, die die Abdeckplatte 36, 37 mit dem Kernkörper 34 stoffschlüssig verbindet. Die Querschlitze 87 verhindern, dass das beim Schweißen aufgeschmolzene Material über die der Montagefläche 36a, 37a entgegengesetzte Außenfläche 36b, 37b vorsteht, von denen mindestens eine als Befestigungsfläche zur Anlage an beispielsweise einem Führungsschlitten 7 genutzt werden kann, wie dies in Figur 2 illustriert ist.

Die Abdeckplatten 36, 37 können mit dem Kernkörper 34 auch verklebt oder verschraubt oder vernietet sein, wobei diese Aufzählung nicht als endgültig zu verstehen ist. Der Rahmenkörper 35 ist an den Abdeckplatten 36, 37 nicht befestigt, so dass seine Relativlage bezüglich des

Kernkörpers 34 durch die Anbringung der Abdeckplatten 36, 37 nicht beeinträchtigt wird.

Die Abdeckplatten 36, 37 bestehen im Übrigen bevorzugt aus Stahl, insbesondere aus Edelstahl.

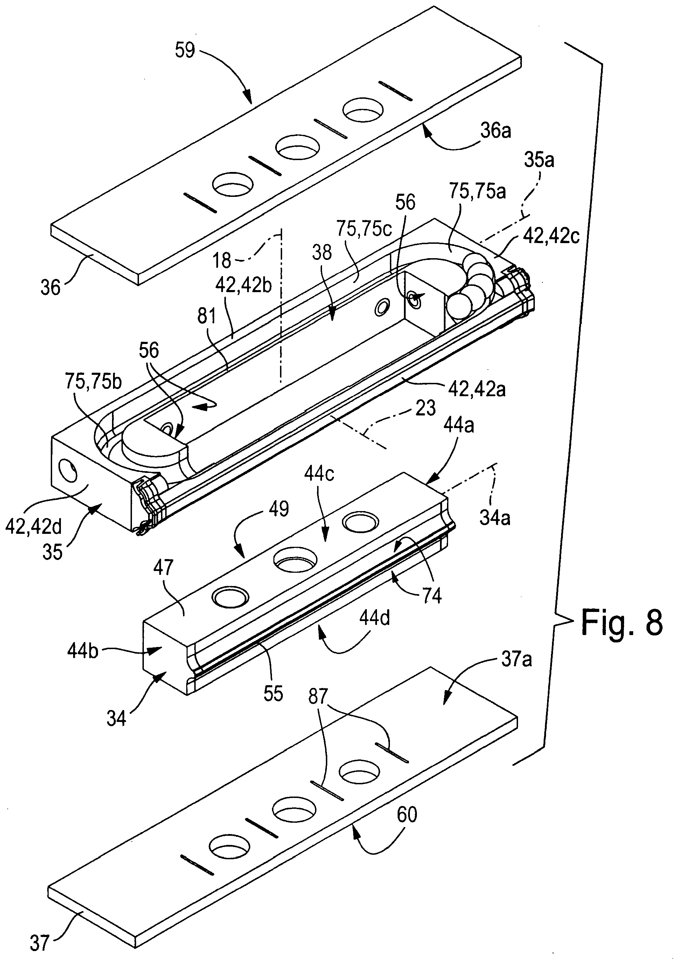

Wie insbesondere aus Figuren 5 und 8 gut ersichtlich ist, weist der Kernkörper 34 zweckmäßigerweise einen bevorzugt quaderförmigen Hauptabschnitt 47 auf, der die Rückfläche 49 sowie die obere und untere Außenfläche 44c, 44d bildet. An der dem vorderen Rahmenschenkel 42a zugewandten Vorderseite trägt der Hauptabschnitt 47 einen bevorzugt einstückig angeformten rippenförmigen Vorsprung, der aufgrund seiner noch zu erläuternden Funktion als Abstützrippe 55 bezeichnet sei. Die Abstützrippe 55 ist bevorzugt höhenmittig an dem Hauptabschnitt angeordnet und erstreckt sich zweckmäßigerweise in der Rahmenebene 43 und dabei in Achsrichtung der Längsachse 34a. Die Abstützrippe 55 bildet auch die am vorderen Rahmenschenkel 42a anliegende Vorderfläche 50 des Kernkörpers 34.

Die Abdeckplatten 36, 37 haben einen größeren Umriss als der Kernkörper 34. Jede Abdeckplatte 36, 37 ragt über die Rückfläche 49 und die beiden Stirnflächen 44a, 44b des Kernkörpers 34 hinaus und deckt den Rahmenkörper 35 im Bereich des hinteren Rahmenschenkels 42b und im Bereich der stirnseitigen Rahmenschenkel 42c, 42d jeweils bevorzugt komplett ab. Im Bereich der Vorderseite 24 ragt jede Abdeckplatte 36, 37 über den Hauptabschnitt 47 vor, vorzugsweise in etwa so weit wie die in der Höhenrichtung 18 dazu beabstandete Abstützrippe 55. Die Abstützrippe 55 kommt somit jeweils mit Höhenabstand zwischen den über den Hauptabschnitt 47 hinausragenden vorderen Randabschnitten 52 der beiden Abdeckplatten 36, 37 zu liegen.

Der vordere Rahmenschenkel 42 steht zur Vorderseite 24 hin zweckmäßigerweise weiter vor als jeder der beiden vorderen Randabschnitte 52 der Abdeckplatten 36, 37.

Die beiden Umlaufkanäle 16, 17, von denen der oberhalb der Mittelebene 22 liegende Umlaufkanal 16 auch als erster Umlaufkanal 16 und der unterhalb der Mittelebene 22 liegende Umlaufkanal 17 auch als zweiter Umlaufkanal 17 bezeichnet werden, sind in ihrer Kanallängsrichtung 28 jeweils funktionell in mehrere Kanal-Längenabschnitte eingeteilt, die unmittelbar ineinander übergehen. Einer dieser Kanal-Längenabschnitte ist dem vorderen Rahmenschenkel 42a zugeordnet und bildet einen geradlinigen, bevorzugt parallel zu der Längsachse 14 ausgerichteten Abstütz-Kanalabschnitt 66. Des Weiteren enthält jeder Umlaufkanal 16, 17 einen Rücklauf-Kanalabschnitt 67, der dem hinteren Rahmenschenkel 42b zugeordnet ist. Der Rücklauf-Kanalabschnitt 67 ist vorzugsweise geradlinig ausgebildet und verläuft zweckmäßigerweise parallel zu der Längsachse 14. Seine Länge entspricht bevorzugt derjenigen des Abstütz-Kanalabschnittes 66. Der Abstütz-Kanalabschnitt 66 und der Rücklauf-Kanalabschnitt 67 erstrecken sich jeweils entlang des Kernkörpers 34, wobei sie jeweils einerseits auf Höhe der ersten Stirnfläche 44a und andererseits auf Höhe der zweiten Stirnfläche 44b enden.

Schließlich enthält jeder Umlaufkanal 16, 17 zwei bogenförmige Umlenk-Kanalabschnitte 68, 69, die jeweils einem der stirnseitigen Rahmenschenkel 42c, 42d zugeordnet sind. Jeder Umlenk-Kanalabschnitt 68, 69 erstreckt sich in einer zu der Rahmenebene 43 parallelen Umlenkebene und stellt eine Verbindung zwischen den im Bereich der gleichen Stirnfläche 44a oder 44b des Kernkörpers 34 liegenden Endabschnitten des Abstütz-Kanalabschnittes 66 und des Rücklauf-Kanalabschnittes 67 her. Exemplarisch erstreckt sich jeder Umlenk-Kanalabschnitt 68, 69 entlang einer Bogenlänge von 180°. Jeder bogenförmige Umlenk-Kanalabschnitt 68, 69 kann bei Bedarf auch noch einen sich an den 180°-Bogen anschließenden linearen Übergangs-Kanalabschnitt aufweisen, der dem jeweils zugeordneten Abstütz-Kanalabschnitt 66 oder Rücklauf-Kanalabschnitt 67 zugewandt ist. Auf diese Weise kann jeder Umlenk-Kanalabschnitt 68, 69 eine U-förmige Gestalt haben.

Jeder Abstütz-Kanalabschnitt 66 ist gemeinsam von dem vorderen Rahmenschenkel 42a, vom Kernkörper 34 und von jeweils einer der Abdeckplatten 36, 37 gebildet. Genauer gesagt trägt seitens des Kernkörpers 34 dessen dem vorderen Rahmenschenkel 42a zugewandter vorderer Endabschnitt 61 einschließlich der Abstützrippe 55 zur Bildung der beiden Abstütz-Kanalabschnitte 66 bei und seitens der beiden Abdeckplatten 36, 37 wirkt deren über den Kernkörper 34 vorstehender vorderer Randabschnitt 52 bei der umfangsseitigen Begrenzung des jeweils benachbarten Abstütz-Kanalabschnittes mit.

Jeder Abstütz-Kanalabschnitt 66 hat im Bereich der Vorderseite 24 der Linearführungseinheit 8 eine sich in der Achsrichtung der Längsachse 14 erstreckende schlitzartige Öffnung, die als Arbeits-Längsschlitz 72 bezeichnet sei. Die Breite des Arbeits-Längsschlitzes 72 ist geringer als die Breite beziehungsweise der Durchmesser der sich im Umlaufkanal 16, 17 befindenden Wälzlagerelemente 32, die somit nicht durch den Arbeits-Längsschlitz 72 hindurch herausfallen können. Allerdings ragen die sich momentan in dem Abstütz-Kanalabschnitt 66 befindenden Wälzlagerelemente 32 jeweils partiell durch den Arbeits-Längsschlitz 72 hindurch nach außen, wobei die nach außen ragenden Umfangsabschnitte der Wälzlagerelemente 32 als Arbeitsabschnitte 73 bezeichnet werden können.

Im Betrieb der Linearführungseinrichtung 1 liegen die Wälzlagerelemente 32 mit ihren Arbeitsabschnitten 73 an einer zugeordneten Führungsfläche 13 der Führungsschiene 5 an, an der sie sich abwälzen, wenn die Linearführungseinheit 8 bezüglich der Führungsschiene 5 eine Linearbewegung in der Verfahrrichtung 6 ausführt.

Der Arbeits-Längsschlitz 72 des ersten Umlaufkanals 16 ist längsseits zum einen von dem vorderen Rahmenschenkel 42a und zum anderen vom vorderen Randabschnitt 52 der ersten Abdeckplatte 36 begrenzt. Der Abstütz-Kanalabschnitt 66 des zweiten Umlaufkanals 17 ist zum einen auch von dem vorderen Rahmenschenkel 42a begrenzt und zum anderen vom vorderen Randabschnitt 52 der zweiten Abdeckplatte 37.

Mit seinem vorderen Endabschnitt 61 bildet der Kernkörper 34 einen Wandabschnitt jedes Abstütz-Kanalabschnittes 66, der als Abstützfläche 74 für die sich momentan im betreffenden Abstütz-Kanalabschnitt befindenden Wälzlagerelemente 32 fungiert. Die Abstützfläche 74 ist im Querschnitt gesehen zweckmäßigerweise konkav bogenförmig gekrümmt, so dass sich bezüglich der zugeordneten Wälzlagerelemente 32 ein gewisser Zentrierungseffekt einstellt. Wenn die Wälzlagerelemente 32 an ihren Arbeitsabschnitten 73 durch die zugeordnete Führungsschiene mit externen Kräften beaufschlagt werden, erfahren sie durch die konkav gekrümmte Abstützfläche 74, deren Radius zweckmäßigerweise dem Radius der kugelförmigen Wälzlagerelemente 32 entspricht, eine Abstützung, so dass weder der vordere Rahmenschenkel 42a noch der vordere Randabschnitt 52 der zugeordneten Abdeckplatte 36, 37 eine Beanspruchung erfährt. Diese letztgenannten Komponenten dienen im Wesentlichen nur dazu, die Wälzlagerelemente 32 im jeweiligen Umlaufkanal 16, 17 gegen ein Herausfallen zu sichern.

Zweckmäßigerweise ist die Abstützrippe 55 so ausgebildet, dass sie für jeden der beiden Abstütz-Kanalabschnitte 66 deren Abstützfläche 74 bildet.

Zumindest die mit den Wälzlagerelementen 32 in Kontakt stehenden Wandabschnitte des Rücklauf-Kanalabschnittes 67 und der Umlenk-Kanalabschnitte 68, 69 beider Umlaufkanäle 16, 17 sind ohne Mitwirkung des Kernkörpers 34 ausschließlich gemeinsam von dem Rahmenkörper 35 und von den beiden bezüglich des Kernkörpers 34 und des Rahmenkörpers 35 separat ausgebildeten Abdeckplatten 36, 37 gebildet sind.

Bevorzugt sind der Rücklauf-Kanalabschnitt 67 und die beiden Umlenk-Kanalabschnitte 68, 69 bei beiden Umlaufkanälen 16, 17 in ihrer Gesamtheit ausschließlich gemeinsam von dem Rahmenkörper 35 und jeweils einer der Abdeckplatten 36, 37 gebildet. Der Kernkörper 34 ist an der Bildung des Rücklauf-Kanalabschnittes 67 und der Umlenk-Kanalabschnitte 68, 69 nicht beteiligt. Mithin hat der Kernkörper 34 außer im Bereich des Abstütz-Kanalabschnittes 66 keinerlei Führungsfunktion für die Wälzlagerelemente 32. Seine Herstellung ist dadurch sehr vereinfacht.

Zur Bildung der Umlaufkanäle 16, 17 ist in dem Rahmenkörper 35 sowohl an seiner der ersten Abdeckplatte 36 zugewandten Oberseite 45 als auch an seiner der zweiten Abdeckplatte 37 zugewandten Unterseite 46 jeweils eine den Längsverlauf des Rücklauf-Kanalabschnittes 67 und der beiden sich daran anschließenden Umlenk-Kanalabschnitte 68, 69 vorgebende Führungsnut 75 ausgebildet, die an ihrer offenen Längsseite 79 von der benachbarten Abdeckplatte 36, 37 abgedeckt ist. Jede Führungsnut 75 hat zwei bogenförmige Längenabschnitte 75a, 75b, die jeweils an der Bildung eines der beiden Umlenk-Kanalabschnitte 68, 69 beteiligt sind, und ferner einen sich dazwischen erstreckenden geradlinigen Längenabschnitt 75c, der an der Bildung des Rücklauf-Kanalabschnittes 67 beteiligt ist.

Der gesamte Querschnitt jedes Umlaufkanals 16, 17 ist im Bereich der Umlenk-Kanalabschnitte 68, 69 und des Rücklauf-Kanalabschnittes 67 zweckmäßigerweise von der Führungsnut 75 gebildet, die mithin eine derartige Tiefe hat, dass die sich momentan im Bereich einer Führungsnut 75 befindenden Wälzlagerelemente 32 vollständig in der Führungsnut 75 und mithin im Rahmenkörper 35 aufgenommen sind. Somit erübrigt sich an den Abdeckplatten 36, 37 eine Nutausbildung. Die Abdeckplatten 36, 37 können mit ihrer ebenen Montagefläche 36a, 37a den zugeordneten Umlaufkanal 16, 17 begrenzen.

Aus Figur 5 ist ersichtlich, dass die Führungsnuten 75 längsseits zweckmäßigerweise mit jeweils einer Nutöffnung 79 zu jeweils einer der oberen und unteren Außenflächen 56c, 56d des Rahmenkörpers 35 offen sind und dort durch die angesetzte Abdeckplatte 36, 37 verschlossen sind.

Jede der beiden Führungsnuten 75 hat über ihre gesamte Länge hinweg zweckmäßigerweise eine konstante Querschnittskontur.

Jede Führungsnut 75 hat zwei Nutflanken, nämlich eine zu dem Kernkörper 34 benachbarte innere Nutflanke 77 und eine zu der inneren Nutflanke 77 beabstandete, von dem Kernkörper 34 weiter entfernte äußere Nutflanke 78, die der inneren Nutflanke 77 zugewandt ist. Die beiden Nutflanken 77, 78 liegen sich insbesondere in der zugeordneten Kanalebene 16', 17' mit Abstand gegenüber.

Die beiden Nutflanken 77, 78 begrenzen die längsseitige Nutöffnung 79, die von der zugehörigen Abdeckplatte 36, 37 abgedeckt ist und der ein sich zwischen den beiden Nutflanken 77, 78 erstreckender Nutgrund 80 in der Höhenrichtung 18 gegenüberliegt.

Es ist von Vorteil, wenn sich die beiden Nutflanken 77, 78 bis hin zu der die längsseitige Nutöffnung 79 abdeckenden Abdeckplatte 36, 37 erstrecken, so dass die Führungsnut 75 im Bereich des Rücklauf-Kanalabschnittes 67 und der beiden Umlenk-kanalabschnitte 68 ringsum komplett gemeinsam ausschließlich von dem Rahmenkörper 35 und jeweils einer Abdeckplatte 36, 37 verschlossen ist.

Die innere Nutflanke 77 befindet sich an einem von dem Rahmenkörper 35 gebildeten Wandabschnitt, der als innerer Nut-Wandabschnitt 81 bezeichnet sei und der die sich außerhalb des Abstütz-Kanalabschnittes 66 in einem Umlaufkanal 16, 17 befindlichen Wälzlagerelemente 32 vom benachbarten Kernkörper 34 abschirmt. Der innere Nut-Wandabschnitt 81 fungiert also als Trennwand zwischen den Wälzlagerelementen 32 und dem Kernkörper 34, um einen gegenseitigen Kontakt zu verhindern.

Jede Führungsnut 75 mündet mit dem dem geradlinigen Längenabschnitt 75c entgegengesetzten Endbereich jedes bogenförmigen Längenabschnittes 75a, 75b mittels einer Mündung 71 an der Innenfläche 56 des zugeordneten stirnseitigen Rahmenschenkels 42c, 42d zu der Rahmenöffnung 38 hin aus. Dort schließt sich jeweils einer der beiden Endabschnitte des Abstütz-Kanalabschnittes 66 an.

Vorzugsweise deckt jede Abdeckplatte 36, 37 die ihr zugeordnete Führungsnut 75 über ihre gesamte Länge hinweg vollständig ab und begrenzt außerdem teilweise den zugeordneten Abstütz-Kanalabschnitt 66. Ist eine Abdeckplatte 36 oder 37 vom Rahmenkörper 35 und Kernkörper 34 abgenommen, liegt somit eine ringförmig in sich geschlossene nutartige Vertiefung vor, die gemeinsam von der Führungsnut 75 und - im Bereich des Abstütz-Kanalabschnittes 66 - gemeinsam von dem vorderen Rahmenschenkel 42a und dem vorderen Endabschnitt 61 des Kernkörpers 34 begrenzt ist. In diese nutartige Vertiefung können die Wälzlagerelemente 32 beim Zusammenbau der Linearführungseinheit 8 bequem eingelegt werden, bevor die zugeordnete Abdeckplatte 36, 37 montiert wird.

## Patentansprüche

1. Linearführungseinrichtung, mit mindestens einer Linearführungseinheit (8), die über ein Gehäuse (15) verfügt, das zwei in einer Höhenrichtung zueinander beabstandete Abdeckplatten (36, 37) und dazwischen einen separaten Kernkörper (34) und einen den Kernkörper (34) in einer zu der Höhenrichtung senkrechten Rahmenebene (42) umschließenden separaten Rahmenkörper (35) aufweist, wobei das Gehäuse (15) zwei in der Höhenrichtung zueinander beabstandete und ringförmig in sich geschlossene Umlaufkanäle (16, 17) definiert, die jeweils eine Vielzahl von in der Kanallängsrichtung (28) aufeinanderfolgend angeordneten Wälzlagerelementen (32) aufnehmen, die eine Umlaufbewegung (33) in der Kanallängsrichtung (28) ausführen können, wobei jeder Umlaufkanal (16, 17) einen einem vorderen Rahmenschenkel (42a) des Rahmenkörpers (35) zugeordneten und die sich in ihm befindenden Wälzlagerelemente (32) gegen äußere Kräfte abstützenden geradlinigen Abstütz-Kanalabschnitt (66), einen einem hinteren Rahmenschenkel (42b) des Rahmenkörpers (35) zugeordneten und zu dem Abstütz-Kanalabschnitt (66) beabstandeten Rücklauf-Kanalabschnitt (67) sowie zwei stirnseitig angeordnete und jeweils einem stirnseitigen Rahmenschenkel (42c, 42d) des Rahmenkörpers (35) zugeordnete bogenförmige Umlenk-Kanalabschnitte (68, 69) aufweist, wobei jeder Abstütz-Kanalabschnitt (66) längsseits über einen das partielle Hindurchragen der sich in ihm befindenden Wälzlagerelemente (32) ermöglichenden und von dem vorderen Rahmenschenkel (42a) begrenzten Arbeits-Längsschlitz (72) verfügt und wobei der Kernkörper (34) einen als Abstützfläche (74) für die sich momentan in den beiden Abstütz-Kanalabschnitten (66) befindenden Wälzlagerelemente (32) fungierenden Wandabschnitt jedes Abstütz-Kanalabschnittes (66) bildet, **dadurch gekennzeichnet, dass** zumindest die mit den Wälzlagerelementen in Kontakt stehenden Wandabschnitte des Rücklauf-Kanalabschnittes (67) und der Umlenk-Kanalabschnitte (68, 69) beider Umlaufkanäle (16, 17) ohne Mitwirkung des Kernkörpers (34) ausschließlich gemeinsam von dem Rahmenkörper (35) und von den beiden bezüglich des Kernkörpers (34) und des Rahmenkörpers (35) separat ausgebildeten Abdeckplatten (36, 37) gebildet sind, indem in dem Rahmenkörper (35) an seiner den Abdeckplatten (36, 37) zugewandten Oberseite (45) und Unterseite (46) jeweils eine sich entlang des hinteren Rahmenschenkels (42b) und entlang den beiden stirnseitigen Rahmenschenkeln (42c, 42d) erstreckende Führungsnut (75) ausgebildet ist, die sowohl im Bereich des hinteren Rahmenschenkels (42b) als auch im Bereich der beiden stirnseitigen Rahmenschenkel (42c, 42d) von der benachbarten Abdeckplatte (36, 37) abgedeckt ist, wobei jede Abdeckplatte (36, 37) zugleich auch gemeinsam mit dem vorderen Rahmenschenkel (42a) des Rahmenkörpers (35) einen der beiden Arbeits-Längsschlitze (72) begrenzt und wobei jede Abdeckplatte (36, 37) ausschließlich an dem Kernkörper (34) befestigt ist und nur dadurch die beiden Abdeckplatten (36, 37), der Kernkörper (34) und der Rahmenkörper (35) zusammengehalten werden.

2. Linearführungseinrichtung nach Anspruch 1, **dadurch gekennzeichnet, dass** jede der beiden Führungsnuten (75) über ihre gesamte Länge hinweg eine konstante Querschnittskontur hat.

3. Linearführungseinrichtung nach Anspruch 1 oder 2, **dadurch gekennzeichnet, dass** jede der beiden Führungsnuten (75) in der Höhenrichtung eine derartige Tiefe aufweist, dass jedes Wälzlagerelement (32) mit seinem gesamten Volumen darin aufgenommen ist.

4. Linearführungseinrichtung nach einem der Ansprüche 1 bis 3, **dadurch gekennzeichnet, dass** jede der beiden Führungsnuten (75) eine benachbart zu dem Kernkörper (34) angeordnete innere Nutflanke (77) und eine diesbezüglich beabstandete äußere Nutflanke (78) aufweist, wobei sich beide Nutflanken (77, 78) bis hin zu der die betreffende Führungsnut (75) abdeckenden Abdeckplatte (36, 37) erstrecken.

5. Linearführungseinrichtung nach einem der Ansprüche 1 bis 4, **dadurch gekennzeichnet, dass** der Rahmenkörper (35) für jede der beiden Führungsnuten (75) einen benachbart zu dem Kernkörper (34) angeordneten inneren Nut-Wandabschnitt (81) bildet, an dem die Wälzlagerelemente (35) abrollen können.

6. Linearführungseinrichtung nach einem der Ansprüche 1 bis 5, **dadurch gekennzeichnet, dass** der Rahmenkörper (35) mit seinen Rahmenschenkeln (42) eine Rahmenöffnung (38) umschließt, wobei jede Führungsnut (75) an den der Rahmenöffnung (38) zugewandten Innenflächen (56) der beiden stirnseitigen Rahmenschenkel (42c, 42d) ausmündet und dort von einander entgegengesetzten Stirnseiten her in den sich anschließenden Abstütz-Kanalabschnitt (66) übergeht.

7. Linearführungseinrichtung nach einem der Ansprüche 1 bis 6, **dadurch gekennzeichnet, dass** der Kernkörper (34) an einer dem hinteren Rahmenschenkel (42b) des Rahmenkörpers (35) zugeordneten Rückseite eine ebene, nutfreie Rückfläche (49) aufweist, mit der er an dem hinteren Rahmenschenkel (42b) des Rahmenkörpers (35) anliegt.

8. Linearführungseinrichtung nach einem der Ansprüche 1 bis 7, **dadurch gekennzeichnet, dass** der Kernkörper (34) an seinen beiden Stirnseiten jeweils eine ebene Stirnfläche (44a, 44b) aufweist, mit der er an jeweils einem der beiden stirnseitigen Rahmenschenkel (42c, 42d) des Rahmenkörpers (35) anliegt.

9. Linearführungseinrichtung nach einem der Ansprüche 1 bis 8, **dadurch gekennzeichnet, dass** der Kernkörper (34) einen bevorzugt quaderförmigen Hauptabschnitt (47) aufweist, an dessen dem vorderen Rahmenschenkel (42a) zugewandter Vorderseite eine sich in der Längsrichtung des Kernkörpers (34) erstreckende Abstützrippe (55) ausgebildet ist, die für jeden der beiden Abstütz-Kanalabschnitte (66) dessen Abstützfläche (74) bildet.

10. Linearführungseinrichtung nach einem der Ansprüche 1 bis 9, **dadurch gekennzeichnet, dass** sich der Rahmenkörper (35) mit den der von ihm umschlossenen Rahmenöffnung (38) zugewandten Innenflächen (56) seiner Rahmenschenkel (42) derart an der Vorderseite, der Rückseite und den beiden Stirnseiten des Kernkörpers (34) abstützt, dass der Rahmenkörper (35) und der Kernkörper (34) in der von den Rahmenschenkeln (42) aufgespannten Rahmenebene (43) relativ zueinander unbeweglich fixiert sind.

11. Linearführungseinrichtung nach einem der Ansprüche 1 bis 10, **dadurch gekennzeichnet, dass** jede Abdeckplatte (36, 37) die ihr zugeordnete Führungsnut (75) über ihre gesamte Länge hinweg vollständig abdeckt und außerdem den ihr zugeordneten Abstütz-Kanalabschnitt (66) unter Freilassung des Arbeits-Längsschlitzes (72) partiell begrenzt, derart, dass bei abgenommener Abdeckplatte (36, 37) eine von dem Kernkörper (34) und dem Rahmenkörper (35) gemeinsam begrenzte, ringförmig in sich geschlossene nutartige Vertiefung vorliegt, die über ihre gesamte Länge hinweg zum Bestücken mit den Wälzlagerelementen (32) zugänglich ist.

12. Linearführungseinrichtung nach einem der Ansprüche 1 bis 11, **dadurch gekennzeichnet, dass** jede Abdeckplatte (36, 37) sowohl den Kernkörper (34) als auch den hinteren Rahmenschenkel (42b) und die beiden stirnseitigen Rahmenschenkel (42c, 42d) des Rahmenkörpers (35) abdeckt.

13. Linearführungseinrichtung nach einem der Ansprüche 1 bis 12, **dadurch gekennzeichnet, dass** jede Abdeckplatte (36, 37) durch eine Schweißverbindung und/oder eine Klebeverbindung und/oder eine Verbindung mittels gesonderter Befestigungselemente am Kernkörper (34) befestigt ist.

14. Linearführungseinrichtung nach einem der Ansprüche 1 bis 13, **dadurch gekennzeichnet, dass** jede der vom Kernkörper (34) definierten Abstützflächen (74) im Querschnitt gesehen konkav bogenförmig gekrümmt ist.

15. Linearführungseinrichtung nach einem der Ansprüche 1 bis 14, **dadurch gekennzeichnet, dass** sie mindestens eine Führungsschiene (5) aufweist, an der mindestens eine Linearführungseinheit (8) mit den durch den Arbeits-Längsschlitz (72) ihrer Umlaufkanäle (16, 17) hindurchragenden Abschnitten der Wälzlagerelemente (32) anliegt, wobei die Linearführungseinheit (8) und die Führungsschiene (5) relativ zueinander linear bewegbar sind.

## Claims

1. Linear guide device with at least one linear guide unit (8) having a housing (15) which has two cover plates (36, 37) spaced apart in a height direction and in between a separate core body (34) and a separate frame body (35) encompassing the core body (34) in a frame plane (42) perpendicular to the height direction, wherein the housing (15) defines two annular self-contained circulation channels (16, 17) spaced apart in the height direction, each holding a multiplicity of roller bearing elements (32) arranged consecutively in the channel axial direction (28) and able to perform a circulatory movement (33) in the channel axial direction (28), wherein each circulation channel (16, 17) has a straight support channel section (66) assigned to a front frame leg (42a) of the frame body (35) and supporting the roller bearing elements (32) contained in it against external forces, a return flow channel section (67) assigned to a rear frame leg (42b) of the frame body (35) and at a distance from the support channel section (66), and two curved deflecting channel sections (68, 69) arranged at the end and each assigned to an end frame leg (42c, 42d) of the frame body (35), wherein each support channel section (66) has on the long side a working longitudinal slot (72) allowing the partial protruding through of the roller bearing elements (32) contained in it and bounded by the front frame leg (42a), and wherein the core body (34) forms a wall section of each support channel section (66) acting as support face (74) for the roller bearing elements (32) located momentarily in the two support channel sections (66), **characterised in that** at least the wall sections of the return flow channel section (67) in contact with the roller bearing elements (32) and the deflecting channel sections (68, 69) of both circulation channels (16, 17), without involvement of the core body (34), are formed exclusively and jointly by the frame body (35) and by the two cover plates (36, 37) formed separately with respect to the core body (34) and the frame body (35) **in that**, in the frame body (35) on its top side (45) and bottom side (46) facing the cover plates (36, 37), there is formed in each case a guide slot (75) extending along the rear frame leg (42b) and along the two end frame legs (42c, 42d), which is covered by the adjacent cover plate (36, 37) both in the area of the rear frame leg (42b) and in the area of the two end frame legs (42c, 42d), wherein each cover plate (36, 37) at the same time, together with the front frame leg (42a) of the frame body (35), bounds one of the two working longitudinal slots (72) and wherein each cover plate (36, 37) is fixed solely to the core body (34), and only by this means are the two cover plates (36, 37), the core body (34) and the frame body (35) held together.

2. Linear guide device according to claim 1, **characterised in that** each of the two guide slots (75) has a constant cross-sectional contour over its entire length.

3. Linear guide device according to claim 1 or 2, **characterised in that** each of the two guide slots (75) has in the height direction such a depth that each roller bearing element (32) is held in it with its entire volume.

4. Linear guide device according to any of claims 1 to 3, **characterised in that** each of the two guide slots (75) has an inner slot side (77) adjacent to the core body (34) and an outer slot side (78) at a distance from the former, wherein both slot sides (77, 78) extend as far as the cover plate (36, 37) covering the relevant guide slot (75).

5. Linear guide device according to any of claims 1 to 4, **characterised in that** the frame body (35) forms for each of the two guide slots (75) an inner slot wall section (81) arranged adjacent to the core body (34) and on which the roller bearing elements (32) are able to roll.

6. Linear guide device according to any of claims 1 to 5, **characterised in that** the frame body (35) encompasses with its frame legs (42) a frame opening (38), wherein each guide slot (75) opens out at the inner surfaces (56) of the two end frame legs (42c, 42d) facing the frame opening (38) and from there merges from opposite end faces into the adjacent support channel section (66).

7. Linear guide device according to any of claims 1 to 6, **characterised in that** the core body (34) has on a rear side assigned to the rear frame leg (42b) of the frame body (35) a flat, slot-free rear surface (49), with which it abuts the rear frame leg (42b) of the frame body (35).

8. Linear guide device according to any of claims 1 to 7, **characterised in that** the core body (34) has at each of its two end faces a flat end face (44a, 44b) with which it abuts in each case one of the two end frame legs (42c, 42d) of the frame body (35).

9. Linear guide device according to any of claims 1 to 8, **characterised in that** the core body (34) has a preferably square main section (47) on the front of which, facing the front frame leg (42a), there is formed a support rib (55) extending in the longitudinal direction of the core body (34) and forming the support face (74) for each of the two support channel sections (66).

10. Linear guide device according to any of claims 1 to 9, **characterised in that** the frame body (35) rests, with the inner surfaces (56) of its frame legs (42) facing the frame opening (38) encompassed by it, on the front, rear and two end faces of the core body (34) in such a way that the frame body (35) and the core body (34) are fixed immovably relative to one another in the frame plane (43) spanned by the frame legs (42).

11. Linear guide device according to any of claims 1 to 10, **characterised in that** each cover plate (36, 37) covers its assigned guide slot (75) completely over its entire length and also partly bounds the support channel section (66) assigned to it, leaving free the working longitudinal slot (72), in such a way that, with the cover plate (36, 37) removed, an annular self-contained slot-like recess, jointly bounded by the core body (34) and the frame body (35), is available and is accessible over its entire length for equipping with the roller bearing elements (32).

12. Linear guide device according to any of claims 1 to 11, **characterised in that** each cover plate (36, 37) covers both the core body (34) and also the rear frame leg (42b) and the two end frame legs (42c, 42d) of the frame body (35).

13. Linear guide device according to any of claims 1 to 12, **characterised in that** each cover plate (36, 37) is fixed to the core body (34) by a welded joint and/or an adhesive bond and/or a connection by means of separate mounting elements.

14. Linear guide device according to any of claims 1 to 13, **characterised in that** each of the support faces (74) defined by the core body (34) has a concave curve viewed in cross-section.

15. Linear guide device according to any of claims 1 to 14, **characterised in that** it has at least one guide rail (5), on which at least one linear guide unit (8) lies with the sections of the roller bearing elements (32) reaching through the working longitudinal slot (72) of its circulation channels (16, 17), wherein the linear guide unit (8) and the guide rail (5) are capable of linear movement relative to one another.

## Revendications

1. Dispositif de guidage linéaire, avec au moins une unité de guidage linéaire (8), qui dispose d'un boîtier (15), qui présente deux plaques de recouvrement (36, 37) tenues à distance l'une par rapport à l'autre dans un sens de la hauteur et, de manière intercalée, un corps central (34) séparé et un corps de cadre (35) séparé renfermant le corps central (34) dans un plan de cadre (42) perpendiculaire par rapport au sens de la hauteur, dans lequel le boîtier (15) définit deux canaux périphériques (16, 17) tenus à distance l'un par rapport à l'autre dans le sens de la hauteur et fermés sur soi de manière à présenter une forme annulaire, qui logent respectivement une multitude d'éléments de palier de roulement (32) disposés les uns à la suite des autres dans le sens longitudinal de canal (28), qui peuvent exécuter un mouvement périphérique (33) dans le sens longitudinal de canal (28), dans lequel chaque canal périphérique (16, 17) présente une section de canal de soutien (66) rectiligne associée à une branche de cadre avant (42a) du corps de cadre (35) et prenant appui dans des éléments de palier de roulement (32) s'y trouvant à l'encontre de forces extérieures, une section de canal de retour (67) associée à une branche de cadre arrière (42b) du corps de cadre (35) et tenue à distance par rapport à la section de canal de soutien (66) ainsi que deux sections de canal de dérivation (68, 69) en forme d'arc disposées côté frontal et associées respectivement à une branche de cadre côté frontal (42c, 42d) du corps de cadre (35), dans lequel chaque section de canal de soutien (66) dispose côté longitudinal d'une entaille longitudinale de travail (72) permettant la saillie partielle des éléments de palier de roulement (32) s'y trouvant et délimitée par la branche de cadre avant (42a) et dans lequel le corps central (34) forme une section de paroi, faisant office de surface de soutien (74) pour les éléments de palier de roulement (32) se trouvant momentanément dans les deux sections de canal de soutien (66), de chaque section de canal de soutien (66), **caractérisé en ce qu'**au moins les sections de paroi, se trouvant en contact avec les éléments de palier de roulement, de la section de canal de retour (67) et des sections de canal de déviation (68, 69) des deux canaux périphériques (16, 17) sans intervention du corps central (34) sont formées exclusivement conjointement par le corps de cadre (35) et par les deux plaques de recouvrement (36, 37) réalisées séparément par rapport au corps central (34) et au corps de cadre (35) **en ce qu'**est réalisée dans le corps de cadre (35) au niveau de son côté supérieur (45) et son côté inférieur (46) tournés vers les plaques de recouvrement (36, 37), respectivement une rainure de guidage (75) s'étendant le long de la branche de cadre arrière (42b) et le long des deux branches de cadre côté frontal (42c, 42d), qui est recouverte à la fois dans la zone de la branche de cadre arrière (42b) et dans la zone des deux branches de cadre côté frontal (42c, 42d) de la plaque de recouvrement (36, 37) adjacente, dans lequel chaque plaque de recouvrement (36, 37) délimite dans le même temps également conjointement avec la branche de cadre avant (42a) du corps de cadre (35) une des deux entailles longitudinales de travail (72) et dans lequel chaque plaque de recouvrement (36, 37) est fixée exclusivement au niveau du corps central (34) et c'est seulement ainsi que les deux plaques de recouvrement (36, 37), le corps central (34) et le corps de cadre (35) sont maintenus ensemble.

2. Dispositif de guidage linéaire selon la revendication 1, **caractérisé en ce que** chacune des deux rainures de guidage (75) a au-delà de la totalité de sa longueur un contour de section transversale constant.

3. Dispositif de guidage linéaire selon la revendication 1 ou 2, **caractérisé en ce que** chacune des deux rainures de guidage (75) présente dans le sens de la hauteur une profondeur telle que chaque élément de palier de roulement (32) est logé dans celle-ci avec la totalité de son volume.

4. Dispositif de guidage linéaire selon l'une quelconque des revendications 1 à 3, **caractérisé en ce que** chacune des deux rainures de guidage (75) présente un flanc de rainure intérieur (77) disposé de manière adjacente par rapport au corps central (34) et un flanc de rainure extérieur (78) tenu à distance à cet égard, dans lequel les deux flancs de rainure (77, 78) s'étendent jusqu'à la plaque de recouvrement (36, 37) recouvrant la rainure de guidage (75) concernée.

5. Dispositif de guidage linéaire selon l'une quelconque des revendications 1 à 4, **caractérisé en ce que** le corps de cadre (35) pour chacune des deux rainures de guidage (75) forme une section de paroi de rainure intérieure (81) disposée de manière adjacente par rapport au corps central (34), au niveau de laquelle les éléments de palier de roulement (35) peuvent rouler.

6. Dispositif de guidage linéaire selon l'une quelconque des revendications 1 à 5, **caractérisé en ce que** le corps de cadre (35) renferme avec ses branches de cadre (42) une ouverture de cadre (38), dans lequel chaque rainure de guidage (75) débouche au niveau des surfaces intérieures (56), tournées vers l'ouverture de cadre (38), des deux branches de cadre (42c, 42d) côté frontal et se confondent à cet endroit depuis des côtés frontaux opposés les uns aux autres, avec la section de canal de soutien (66) se raccordant.

7. Dispositif de guidage linéaire selon l'une quelconque des revendications 1 à 6, **caractérisé en ce que** le corps central (34) présente au niveau d'un côté arrière, associé à la branche de cadre arrière (42b) du corps de cadre (35), une surface postérieure (49) plane, sans rainure, avec laquelle il repose au niveau de la branche de cadre arrière (42b) du corps de cadre (35).

8. Dispositif de guidage linéaire selon l'une quelconque des revendications 1 à 7, **caractérisé en ce que** le corps central (34) présente au niveau de ses deux côtés frontaux respectivement une surface frontale (44a, 44b) plane, avec laquelle il repose au niveau de respectivement une des deux branches de cadre côté frontal (42c, 42d) du corps de cadre (35).

9. Dispositif de guidage linéaire selon l'une quelconque des revendications 1 à 8, **caractérisé en ce que** le corps central (34) présente une section principale (47) de manière préférée parallélépipédique, au niveau du côté avant tourné vers la branche de cadre avant (42a) de laquelle est réalisée une nervure de soutien (55) s'étendant dans le sens longitudinal du corps central (34), qui forme pour chacune des deux sections de canal de soutien (66) sa surface de soutien (74).

10. Dispositif de guidage linéaire selon l'une quelconque des revendications 1 à 9, **caractérisé en ce que** le corps de cadre (35) prend appui avec les surfaces intérieures (56), tournées vers l'ouverture de cadre (38) renfermée par lui, de ses branches de cadre (42) de telle manière au niveau du côté avant, du côté arrière et des deux côtés frontaux du corps central (34) que le corps de cadre (35) et le corps central (34) sont bloqués de manière immobile l'un par rapport à l'autre dans le plan de cadre (43) formé par les branches de cadre (42).

11. Dispositif de guidage linéaire selon l'une quelconque des revendications 1 à 10, **caractérisé en ce que** chaque plaque de recouvrement (36, 37) recouvre en totalité la rainure de guidage (75) qui lui est associée au-delà de la totalité de sa longueur et délimite par ailleurs en partie la section de canal de soutien (66) qui lui est associée en laissant dégagée l'entaille longitudinale de travail (72) de telle manière que lorsque la plaque de recouvrement (36, 37) est retirée, un renfoncement de type rainure délimité conjointement par le corps central (34) et le corps de cadre (35) fermé sur soi de manière à présenter une forme annulaire est présent, qui est accessible au-delà de la totalité de sa longueur pour être équipé des éléments de palier de roulement (32).

12. Dispositif de guidage linéaire selon l'une quelconque des revendications 1 à 11, **caractérisé en ce que** chaque plaque de recouvrement (36, 37) recouvre à la fois le corps central (34) et la branche de cadre arrière (42b) et les deux branches de cadre côté frontal (42c, 42d) du corps de cadre (35).

13. Dispositif de guidage linéaire selon l'une quelconque des revendications 1 à 12, **caractérisé en ce que** chaque plaque de recouvrement (36, 37) est fixée au niveau du corps central (34) par une liaison par soudage et/ou une liaison par collage et/ou une liaison au moyen d'éléments de fixation séparés.

14. Dispositif de guidage linéaire selon l'une quelconque des revendications 1 à 13, **caractérisé en ce que** chacune des surfaces de soutien (74) définies par le corps central (34) est incurvée de manière concave en forme d'arc vue dans la section transversale.

15. Dispositif de guidage linéaire selon l'une quelconque des revendications 1 à 14, **caractérisé en ce qu'**il présente au moins un rail de guidage (5), au niveau duquel repose au moins une unité de guidage linéaire (8) avec les sections, dépassant à travers l'entaille longitudinale de travail (72) de ses canaux périphériques (16, 17), des éléments de palier de roulement (32), dans lequel l'unité de guidage linéaire (8) et le rail de guidage (5) peuvent être déplacés de manière linéaire l'un par rapport à l'autre.
